# DEMANDE DE BREVET EUROPEEN

(11) **EP 2 346 216 A1**
(43) Date de publication de la demande: **20.07.2011**
(21) Numéro de dépôt: 10192012.2
(22) Date de dépôt: 22.11.2010
(51) Int. Cl.: H04L 12/56

(54) **Liason virtuelle entre opérateurs de réseau**

(30) Priorité: 13.01.2010 FR 1000122
(71) Demandeur: Alcatel Lucent, 75007 Paris (FR)
(72) Inventeur: Verchère, Dominique, 91620, NOZAY (FR); Chiosi, Agostino, 91620, Nozay (FR)
(74) Mandataire: Chaffraix, Sylvain

(57) **Abrégé**

Procédé d'approvisionnement d'une liaison (10) réseau de services inter-domaine entre un premier domaine administratif (1) et un second domaine administratif (2), chacun des deux domaines étant pourvu d'au moins un noeud de bordure (11,12), ce procédé comprenant les étapes suivantes :
- approvisionnement de la liaison inter-domaine (10) en ressources réseaux requises dès l'annonce d'une connexion à partir d'un domaine vers l'autre domaine via ladite liaison inter-domaine (10);
- activation de la liaison inter-domaine (10) ;
- maintien de la liaison inter-domaine (10) avec les ressources réseau qui lui sont allouées pendant la connexion ;
- libération des ressources réseaux allouées à la liaison inter-domaine (10) dès la fin de la connexion.

## Description

La présente invention se rapporte aux techniques de raccordement inter-opérateur des réseaux de communications numériques.

On désigne ci-après par « domaine» ou « domaine administratif » toute collection d'éléments de réseau sous la responsabilité d'un seul et même opérateur. Il s'agit notamment de toute unité normalisée de réseau tels qu'une aire (area ou zones IGP), un système autonome (Autonomous System ou AS) ou une couche (Layer en anglais).

Par ailleurs, on entend ici, par opérateur, un fournisseur de services de connectivité (Free^{™}, Nu mericable^{™}, ou Bouygues Telecom^{™} par exemple), un opérateur de réseau (France Telecom^{™} , British Telecom^{™} ou Verizon Communication^{™} par exemple), ou plus généralement une entité administrative responsable d'un certain réseau (un réseau national de recherche et enseignement, un réseau régional, un réseau métropolitain, ou un réseau d'entreprise par exemple).

L'interconnexion inter-opérateur s'effectue généralement en négociant un contrat bilatéral communément de type client/fournisseur (ou « peering ») dans lequel un opérateur se charge d'approvisionner, d'activer et de maintenir la liaison inter-domaine (aussi dite liaison inter-opérateur). Pour cela, chaque operateur réserve au moins un noeud de bordure (ou NNI pour Network to Node Interface, ou aussi POI pour Point Of Interconnect) au niveau de son domaine pour être lié à au moins un noeud de bordure d'un autre domaine.

Cette liaison inter-opérateur est configurée et maintenue, selon le(s) contrat(s) négocié(s), les recommandations et les normes techniques (UIT, ETSI),
- d'une manière manuelle dans laquelle les attributs des services sont configurés manuellement au niveau des deux bouts de la liaison inter-opérateur ;
- d'une manière statique à l'aide des systèmes de gestion des réseaux (notamment, Network Management System en anglais) associés aux deux domaines.

Il en résulte que les liaisons inter-domaine sont, actuellement, approvisionnées et activées d'une manière statique (déterministe), et maintenues en connexion active permanente. Ceci permet à un opérateur de réduire les problèmes de sécurité et de confidentialité qui peuvent être engendré, par exemple, par des signalisations (G)MPLS (Generalized Multiprotocol Label Switching) depuis d'autres domaines requérant un approvisionnement dynamique de nouvelles connexions.

Cependant, une telle configuration d'une liaison inter-domaine signifie aussi que les connexions déjà approvisionnées demeurent réservées même si elles ne transportent aucun trafic inter-domaine, autrement dit peu important si elles sont effectivement utilisées ou non.

Une configuration statique d'une liaison inter-opérateur présente certainement des désavantages.

En effet, une connexion approvisionnée dans une liaison inter-operateur sans qu'elle ne soit effectivement utilisée occupe des ressources réseau qui pourraient être avantageusement utilisées par des connexions intra-domaine. En outre, l'opérateur ne maitrise pas la manière dont ces ressources sont utilisées. Il n'est, par conséquent, pas apte à assurer une gestion par service (par exemple, la bande passante allouée par service) au niveau de cette liaison inter-opérateur.

Par ailleurs, l'interconnexion de deux noeuds de bordure appartenant à deux domaines différents, en absence de toute fonctionnalité de gestion de service et/ou de contrôle, a pour effet d'annuler les capacités de commutation et des interfaces de bordures inter-domaine. Dans ce cas, le moindre changement dans la configuration d'un noeud de bordure n'a d'effet concret sur la liaison inter-domaine que lorsqu'il est aussi effectué au niveau du noeud de bordure en correspondance.

En particulier, l'absence d'une gestion appropriée des services pendant la procédure d'approvisionnement au niveau d'une liaison inter-opérateur constitue une importante contrainte limitative des performances des connectivités inter-domaine, typiquement dans le cas d'une pluralité d'interconnexion inter-opérateur.

Un objet de la présente invention est de remédier aux inconvénients précités.

Un autre objet de la présente invention est de proposer une méthode de liaison virtuelle inter-domaine reconfigurable à la demande des connexions à l'inter-domaine.

Un autre objet de la présente invention est de mieux maîtriser l'utilisation de ressources réseau d'interconnexion entre deux réseaux d'opérateurs.

Un autre objet de la présente invention est la mise à l'échelle des ressources réseau aux connexions inter-domaine.

À cet effet, l'invention propose, suivant un premier aspect, un procédé d'approvisionnement d'une liaison réseau de services inter-domaine entre un premier domaine administratif et un second domaine administratif, chacun des deux domaines étant pourvu d'au moins un noeud de bordure, ce procédé comprenant les étapes suivantes :
- approvisionnement de la liaison inter-domaine en ressources réseaux requises dès l'annonce d'une connexion à partir d'un domaine vers l'autre domaine via ladite liaison inter-domaine;
- activation de la liaison inter-domaine;
- maintien de la liaison inter-domaine avec les ressources réseau qui lui sont allouées pendant la connexion ;
- libération des ressources réseaux allouées à la liaison inter-domaine dès la fin de la connexion.

L'invention propose, selon un deuxième aspect, un domaine administratif pourvu d'au moins un noeud de bordure, comprenant
- un gestionnaire de service inter-domaine permettant d'établir une liaison inter-domaine via ce noeud de bordure;
- une base de données comprenant des informations concernant la liaison inter-domaine établie via ce noeud de bordure et leurs états.

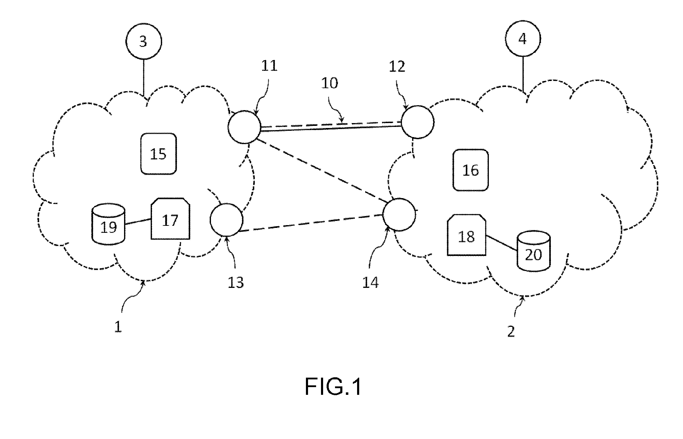

D'autres caractéristiques et avantages de l'invention apparaîtront plus clairement et de manière concrète à la lecture de la description ci-après de modes de réalisation préférés, laquelle est faite en référence à la figure 1 qui illustre graphiquement une représentation fonctionnelle d'éléments permettant l'établissement d'une liaison virtuelle inter-opérateur.

Dans la présente description du procédé et du système de gestion dynamique des connexions inter-domaine au moyen d'une liaison inter-domaine, on part de l'hypothèse
- que le domaine administratif 1 est différent du domaine administratif 2. Autrement dit, le domaine 1 et 2 ne partagent ni le même plan de contrôle ni le même plan de service ;
- que ces deux domaines administratifs 1 et 2 sont gérés, respectivement, par un premier opérateur 3 et un second opérateur 4, ces deux opérateurs 3 et 4 pouvant éventuellement être (ou être rattaché à) un même opérateur ; et
- que chacun des deux domaines administratifs 1 et 2 possède, respectivement, au moins un noeud de bordure 11 et 12 (un ELSR - Egress Label Switch Router - par exemple).

Comme illustré sur la figure 1, une liaison inter-domaine 10 interconnecte le domaine 1 et le domaine 2 par l'intermédiaire des noeuds de bordure 11 et 12. Certainement, un domaine 1 (respectivement 2) peut avoir plus d'un noeud de bordure (noeuds de bordure 12 et 14 pour le domaine 1, noeuds de bordure 11 et 13 pour le domaine 2 par exemple) dont chacun peut comprendre plus d'une interface de liaison avec un autre domaine (à l'exemple du noeud de bordure 11 du domaine 1 et le noeud de bordure 14 du domaine 2).

Afin d'éviter le maintien inconditionnel des ressources réseaux allouées à la liaison inter-domaine 10, les noeuds de bordure 11 et 12 ne sont approvisionnés en ressources réseau nécessaires que lorsqu'une connexion, via la liaison inter-domaine 10, est annoncée au sein de l'un des deux domaines 1 et 2. Autrement, les capacités des noeuds de bordure sont à disposition des connexions intra-domaine. Cette liaison inter-domaine 10 est, par conséquent,
- automatiquement désactivée en absence de connexions à supporter ; et
- automatiquement rétablie avec les paramètres de configuration requis par au moins une connexion annoncée.

C'est pour cela que cette liaison est désignée, dans la suite, par liaison virtuelle inter-domaine 10.

Cette liaison virtuelle inter-domaine 10 est une entité réseau virtuelle qui concerne les deux opérateurs 3 et 4. C'est une liaison logique entre les deux noeuds de bordure 11 et 12 qui appartiennent à deux domaines administratifs 1 et 2 différents.

Les noeuds de bordure 11 et 12 hébergent, notamment, des contrôleurs supportant au moins un même protocole de distribution de labels tel que, par exemple, CR-LDP (Constraint-based Routed Label Distribution protocol), RSVP-TE (Resource Reservation Protocol-Traffic Engineering : recommandation G.8080 de l'ITU-T ou RFC 4974 de l'IETF) ou tout autre protocole équivalent.

L'opérateur 3 (respectivement 4) gèrent son domaine administratif 1 (respectivement 2) au moyen d'au moins
- un contrôleur 15 (respectivement 16) des noeuds de bordure qui permet, dès l'annonce d'un chemin (par exemple l'annonce d'un chemin se fait par un PCE - Elément de Calcul de Chemin - qui calcul, sélectionne et annonce un ERO - Explicit Route Object - cet ERO est ensuite utilisé par le contrôleur de signalisation RSVP-TE) en vue d'une connexion inter-domaine, de sélectionner une interface à utiliser parmi ceux qui sont proposées par les noeuds de bordure 11, 13 (respectivement 12, 14) ;
- un gestionnaire de service inter-domaine 17 (respectivement 18) pourvu d'une base de données 19 (respectivement 20) comprenant des informations concernant les liaisons virtuelles inter-domaine 10 (état, interfaces, connexions, ressources réseaux, capacités par exemple).

Le gestionnaire de service inter-domaine 17, 18 est désigné ci-après par GSID_xy où
- x réfère au domaine auquel le GSID est associé (par exemple x=1 pour désigner le domaine administratif 1) ; et
- y réfère au domaine administratif hôte (par exemple y=2 pour désigner le domaine administratif 2).

Il est à noter que dans le cas où un domaine x est connecté à N domaines différents, alors le domaine x est pourvu de N gestionnaires de service inter-domaine GSID_x1, GSID_x2, ..., GSID_xN.

Chaque GSID_xy peut être identifié d'une manière unique à l'aide
- des codes globaux distinctifs des operateurs tels que les codes des opérateurs (ITU Carrier Code) maintenus par le service de télécommunication de l'ITU-T (RFC M.1400 de l'ITU-T) ; et
- d'un code local de la liaison virtuelle inter-domaine convenu entre l'opérateur x et y.

A titre d'exemple, un gestionnaire de services inter-domaine GSID_xy qui contrôle une liaison inter-domaine, d'identifiant 10.10.255.01 (0x0A0AFF01), entre l'opérateur x = France Telecom^{™}, codé en FRTE, et l'opérateur y = British-Telecom, codé en BTPLC, est identifiable d'une manière unique grâce à la concaténation des informations inter-opérateur globales (FRTEBTPLC par exemple) et l'identifiant de la liaison (10.10.255.01).

Un identifiant unique et global d'une liaison inter-opérateur virtuelle peut être obtenu en concaténant un identifiant ID globalement fixe (par exemple composé d'informations concernant l'opérateur ou un pays/région) et une information locale concernant un point d'accès à un domaine (un identifiant local à chaque domaine et composé, par exemple, de l'adresse du noeud de bordure et/ou d'une adresse de l'interface).

L'instanciation de la liaison virtuelle inter-opérateur 10 est déclenchée suite à toute annonce d'une connexion entrante via un noeud de bordure d'un premier domaine en destination d'un noeud de bordure d'un second domaine. Donc, dès l'avènement d'une route inter-domaine (un ERO annoncé par PCE par exemple) au sein du domaine 1 et incluant le domaine 2, une liaison virtuelle inter-domaine 10 est instancié sur la base de données de la gestion des services inter-domaine qui sont à la disposition du gestionnaire des services inter-domaine 17, 18 ou d'un protocole de routage inter-domaine (EGP - External Border Gateway-, BGP - Border Gateway Protocol - par exemple).

Dès qu'une connexion via la liaison virtuelle inter-domaine 10 est annoncée, alors
- la liaison virtuelle inter-domaine 10, liant les deux noeuds de bordure 11 et 12, est approvisionnée à l'aide des messages de notification (indiquant une session de signalisation), ensuite
- cette connexion est immédiatement activée en fonction des ressources (bande passante, capacité de commutation par exemple) disponibles au niveau des noeuds de bordure 11 et 12 et signalées par la liaison virtuelle.

Il en résulte que la liaison virtuelle inter-domaine 10 est instanciée (la liaison virtuelle inter-domaine 10 établie est représentée sur la figure 1 par un trait contenu).

La procédure d'approvisionnement d'une liaison virtuelle inter-opérateur 10 requière un système de signalisation inter-domaine permettant d'associer les deux bouts de la liaison virtuelle inter-opérateur 10 afin d'échanger
- des identifiants locaux de la liaison (par exemple une adresse de router IPV4 utilisant un format prédéfini et signalé à l'aide de RSVP-TE) ; et
- des paramètres d'ingénierie de trafic, conformément à des règles prédéfinies par les deux opérateurs 3 et 4.

Cependant, il est à noter que les protocoles de signalisation actuels ne permettent pas d'établir/libérer une liaison inter-opérateur virtuelle entre deux domaines administratifs différents. Ces protocoles sont, par conséquent, étendus en vue de supporter l'approvisionnement d'une liaison virtuelle inter-domaine 10 et son activation, permettant d'obtenir une connexion établie entre deux réseaux d'opérateurs.

Un premier mode de réalisation utilise des contrôleurs de signalisation permettant d'associer les deux bouts de la liaison virtuelle inter-opérateur 10. Ce mode comprend une étape d'échange, entre les deux noeuds de bordure 11 et 12, des identifiants de la liaison virtuelle inter-domaine 10 et des attributs des services inter-domaine sous le contrôle du gestionnaire des services inter-domaine 17,18. Avantageusement, ce mode de réalisation ne requière pas la maintenance des états de signalisation via l'actualisation des messages de signalisation parce qu'il se base sur le transfert IP des messages de notification (RFC3473 de l'IETF peut être utilisé pour des messages de notification selon RSVP-TE).

Dès l'annonce d'une route inter-domaine, le gestionnaire de service interdomaine GSID_12 du domaine 1 reçoit une commande d'activation d'un certain service via un de ses noeuds de bordure 11. A la réception de cette commande par le noeud de bordure 11, un message de notification est composé par ce dernier, ensuite envoyé au noeud de bordure 12 afin d'activer la liaison inter-domaine 10. Une fois ce message de notification est accepté par le noeud de bordure 12, ce noeud de bordure 12 transmet une commande à son gestionnaire de service inter-domaine 18 afin de créer une nouvelle entrée dans la base de données 20 concernant cette liaison inter-domaine 10. Le noeud de bordure 12 transmet, par la suite, au noeud de bordure 11 un message de notification pour confirmer l'établissement de la liaison inter-domaine 10.

Dès la réception, par le noeud de bordure 11, du message de notification émis par le noeud de bordure 12, le noeud de bordure 11 envoie, à son tour, une commande à son gestionnaire de service inter-domaine 17 pour mettre à jour l'état de la liaison inter-domaine 10, dans sa base des données 19.

Avantageusement, ce mode de réalisation ne requière pas un moteur de signalisation complet pour la maintenance des états des connexions entre les noeuds de bordure. Les états des liaisons inter-opérateur virtuelles sont maintenus dans les bases de données 19, 20 des liaisons inter-opérateurs virtuelles du gestionnaire des services inter-domaine 17, 18.

En variante ou en combinaison, lorsque le noeud de bordure 12 refuse la requête d'établissement de la liaison inter-domaine 10, émise depuis le noeud de bordure 11, il déclenche un message de notification comprenant un code d'erreur, en destination du noeud de bordure 11. De préférence, le code d'erreur correspond à une explication du rejet de la requête d'établissement de la liaison inter-domaine 10.

L'approvisionnement et l'activation d'une liaison inter-domaine 10 entre le domaine 1 et le domaine 2 met en oeuvre un protocole de signalisation (RSVP-TE par exemple) en y ajoutant un objet de capacité de support d'une liaison inter-domaine 10. L'objet de capacité de support d'une liaison inter-domaine 10 est implémenté d'une manière similaire à celle de l'objet de capacité de support d'un lien réseau comme spécifié dans la RFC 4974 de l'IETF.

Le contenu de l'objet de capacité de support d'une liaison virtuelle inter-opérateur 10 est défini comme une série de sous-objets de longueurs variables selon des règles spécifiées par un protocole de distribution de labels (RSVP-TE par exemple). Chaque sous-objet comprend un ou plusieurs attributs. Le nombre des sous-objets dans chaque objet de capacité de support d'une liaison inter-domaine 10 peut être variable en omettant, par exemple, les sous-objets dont les paramètres ont des valeurs par défaut.

A titre d'exemple illustratif, le nombre de classe de l'objet de capacité de support d'une liaison virtuelle inter-opérateur peut être défini entre 0x80 et 0xBF de sorte que les noeuds de bordure hôtes qui ne le reconnaissent pas, ignorent cet objet sans le transférer ou envoyer un message d'erreur en retour.

Le message de notification est ainsi adapté afin de supporter l'établissement de la liaison virtuelle inter-domaine 10 en y ajoutant l'objet de capacité de support d'une liaison virtuelle inter-domaine 10 lors d'une session de notification.

Ci-après, un exemple illustratif du format d'un message de notification (VI_P_Capability ou Virtuel_Inter-Provider_Capability désigne l'objet de capacité de support d'une liaison virtuelle): 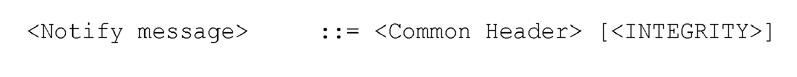 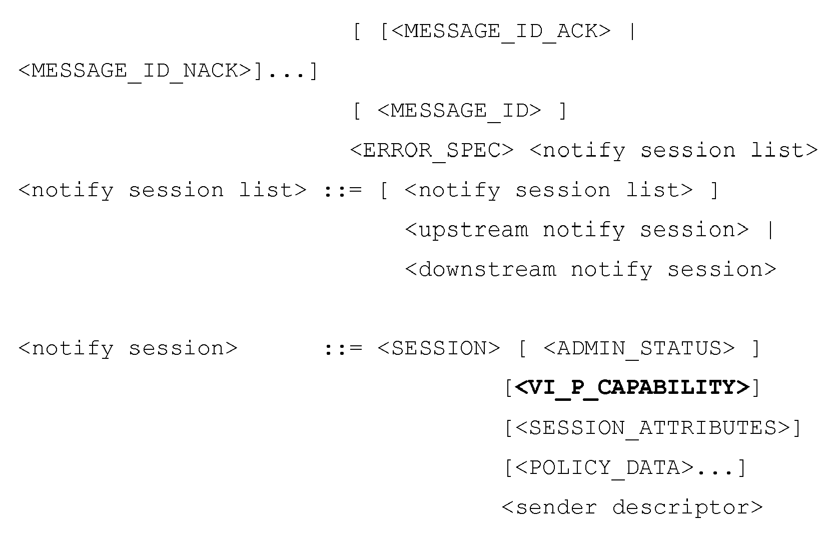 « sender descriptor » suit les règles de la spécification RFC3209 de l'IETF.
L'objet « Sender_Template » comprend l'adresse du noeud de bordure qui a initialisé la liaison inter-domaine. Dans ce contexte de service inter-domaine, le champ « LSP_ID » du « Sender_Template » utilisé pour notifier la liaison inter-domaine virtuelle est impertinent et donc mis à 0.

L'objet « Session » comprend l'adresse du noeud de bordure terminale de la liaison virtuelle inter-domaine. Selon RFC 4974 de l'IETF, le champ du « Call_ID » de l'objet « Session » doit être différent de 0 (0x00). Dans le contexte de ce mode de réalisation, la valeur de ce champ est nommée « VI_P_Link_ID » et elle est transportée dans l'objet « Session » de tous les messages de signalisation relatifs aux connexions associées à cette liaison virtuelle inter-domaine.

La liste des bits de signalisations de l'objet « ADMIN_STATUS » est étendue parce qu'une liaison inter-domaine virtuelle doit être établie entre deux domaine administratifs distincts. Le bit « V » est ajouté au contrôle de la liaison inter-domaine virtuelle et il est utilisé pour indiquer que le message de notification gère une liaison inter-domaine virtuelle. L'utilisation du bit « V » de l'objet « ADMIN_STATUS » dans un message de notification doit inclure la procédure suivante :
- l'activation de la liaison virtuelle inter-domaine ;
- l'acceptation de l'établissement de la liaison virtuelle inter-domaine;
- la désactivation de la liaison virtuelle inter-domaine.

Une fois une liaison inter-domaine virtuelle est établie, l'établissement des connexions (LSP par exemple si établie avec GMPLS/RSVP-TE) associées à cette liaison inter-domaine virtuelle est réalisé à l'aide d'un message de notification transportant un objet « SESSION » avec le même identifiant de la liaison virtuelle inter-domaine.

Par conséquent, une liaison virtuelle inter-domaine est maintenue en envoyant périodiquement des messages de notifications depuis le noeud de bordure d'entrée vers le noeud de bordure de sortie de la liaison virtuelle inter-domaine.

De préférence, aucune information de contrôle de statut concernant une liaison virtuelle inter-domaine n'est maintenue continuellement. Une périodicité d'actualisation peut être convenue entre les deux opérateurs. De préférence, cette périodicité est de l'ordre de la périodicité d'annonce de l'état d'une liaison selon le protocole IGP implémenté au noeud de bordure de sortie (par exemple 1800 secondes).

Un second mode de réalisation se base sur la capacité des contrôleurs de signalisation des noeuds de bordure d'établir des connections au niveau du plan de contrôle seulement, autrement dit de réserver les ports des noeuds de bordure sans activer (cross-connexion) les ressources réseaux au niveau du plan de données. Ce mode de réalisation nécessite l'établissement d'une pluralité de connexions logicielles entre les ports des noeuds de bordure et de maintenir l'état de signalisation de chaque connexion logicielle au niveau de chaque noeud de bordure. Les connexions logicielles sont établies selon la procédure décrite pour l'établissement des LSPs (Label Switching Path) secondaires (RFC 4872 de l'IETF).

Lorsqu'une connexion via la liaison virtuelle inter-domaine 10 est requise entre deux noeuds de bordure 11, 12, la capacité de commutation au niveau de chaque noeud de bordure n'est peut être utilisée conjointement par d'autres connexions ayant une interface commune.

Suite à la désactivation d'une connexion, les ressources réseaux libérées sont rendues disponibles pour les autres connexions qui partagent le même ensemble de ressources au niveau des noeuds de bordure.

L'accès à la liaison virtuelle inter-opérateur 10 requière un ensemble d'attributs. Certains de ces attributs sont transportés par les messages de signalisation de la liaison virtuelle inter-opérateur 10. A titre d'exemple non-limitatif, la liste des attributs d'une liaison virtuelle inter-opérateur 10 peut comprendre les paramètres suivants :
- un identifiant de la liaison virtuelle inter-opérateur : ce paramètre est généralement convenu entre les deux opérateurs 3 et 4;
- des informations inter-opérateur globales : un code national (code de l'opérateur, code du point d'accès par exemple) ;
- l'adresse IPV4/IPV6 d'une interface d'un noeud de bordure local et/ou les identifiants des interfaces d'un noeud de bordure local ;
- l'adresse IPV4/IPV6 d'une interface de noeud de bordure hôte et/ou les identifiants des interfaces d'un noeud de bordure hôte;
- la capacité de commutation du noeud de bordure local: PSC, L2SC, TDM, LSC ou FSC (RFC 3471 de l'IETF) ;
- des informations spécifiques concernant la capacité de commutation en fonction des capacités de commutations des deux bouts de la liaison virtuelle inter-opérateur ;
- le type de codage de la connexion (RFC 3471 de l'IETF);
- la bande passante maximale qui peut être réservée à cette liaison;
- le niveau de la priorité de la connexion (évaluée de 0 à 7 par exemple) qui peut être alignée avec la priorité définie dans le descripteur des capacités de commutation de l'interface des extensions GMPLS des protocoles de routage OSPF-TE ;
- les options de connexion de la liaison virtuelle inter-opérateur :
   o des règles inter-opérateurs (format des flux de données, règles concernant le flux des données par exemple)
   o la disponibilité des connexions sur la liaison virtuelle inter-opérateur ;
   o le temps moyen de réparation (en nombre d'heures pas exemple) ;
   o le temps de retard de bout en bout (l'étalement du temps de retard entre les deux noeuds de bordure) ;
   o le taux de délivrance (ou équivalemment, le taux de perte des paquets de données) ;
   o les services d'application utilisateur.

Il est à noter que les procédures de contrôle d'admission inter-opérateur peuvent être implémentées par chacun des deux opérateurs 3, 4 au niveau de son gestionnaire de service inter-domaine 17,18.

Lorsque toutes les connexions associées à une liaison inter-opérateur sont désactivées, la liaison virtuelle inter-opérateur est maintenue dans la base des données du gestionnaire des services inter-opérateurs de chaque domaine administratif.

S'il n'y a plus de connexion (LSP) à établir ou à maintenir via la liaison virtuelle inter-opérateur 10, l'opérateur 3 (respectivement 4) peut supprimer cette liaison de sa base de données des liaisons inter-opérateurs 19 (respectivement 20) au moyen du gestionnaire des services inter-opérateur 17 (respectivement 18). La suppression d'une liaison virtuelle inter-opérateur 10 d'une base de données des liaisons virtuelles inter-opérateur d'un opérateur est synchronisée avec le contenu des bases des données des liaisons virtuelles inter-opérateur des autres opérateurs. La suppression d'une liaison virtuelle inter-opérateur se base sur l'échange de messages de signalisation entre les contrôleurs des noeuds de bordure 15, 16.

De préférence, une liaison virtuelle inter-opérateur n'est supprimée que lorsqu'il n'y a plus de connexions (LSP) entre les deux noeuds de bordure. Autrement, un trafic inter-domaine serait interrompu.

Les liaisons inter-opérateur virtuelles sont établies/supprimées/modifiées d'une manière dynamique en fonction des demandes de trafic inter-domaine, des règles convenues entre les deux opérateurs, et des ressources effectivement disponibles au niveau des noeuds de bordures.

Avantageusement, les modes de réalisation présentés ci-dessus permettent un approvisionnement dynamique des liaisons inter-domaine qui peuvent être négociées et instanciées à la demande. Ceci permet un meilleur contrôle de l'utilisation des ressources réseau disponibles au niveau des points d'accès aux domaines, ainsi qu'une gestion avancée de ces ressources (par exemple une allocation de la bande passante par service).

## Revendications

1. Procédé d'approvisionnement d'une liaison (10) réseau de services inter-domaine entre un premier domaine administratif (1) et un second domaine administratif (2), chacun des deux domaines étant pourvu d'au moins un noeud de bordure (11,12), ce procédé comprenant les étapes suivantes :
- approvisionnement de la liaison inter-domaine (10) en ressources réseaux requises dès l'annonce d'une connexion à partir d'un domaine vers l'autre domaine via ladite liaison inter-domaine (10);
- activation de la liaison inter-domaine (10) ;
- maintien de la liaison inter-domaine (10) avec les ressources réseau qui lui sont allouées pendant la connexion ;
- libération des ressources réseaux allouées à la liaison inter-domaine (10) dès la fin de la connexion.

2. Procédé selon la revendication 1, **caractérisé en ce que** l'étape d'approvisionnement de la liaison inter-domaine (10) comprend une étape d'échange, entre les deux noeuds de bordure (11,12), des identifiants de la liaison inter-domaine et des attributs du service inter-domaine.

3. Procédé selon la revendication 2, **caractérisé en ce que** l'étape d'approvisionnement comprend une session de notification incluant un objet de capacité de support d'une liaison inter-domaine.

4. Procédé selon la revendication 1, **caractérisé en ce que** l'étape d'activation est faite au niveau des plans de contrôle des deux domaines par les contrôleurs de signalisation des deux noeuds de bordure (11,12).

5. Un domaine administratif (1) pourvu d'au moins un noeud de bordure (11), comprenant
- un gestionnaire de service inter-domaine (17) permettant d'établir une liaison inter-domaine via ce noeud de bordure (11);
- une base de données (19) comprenant des informations concernant la liaison inter-domaine (10) établie via ce noeud de bordure et leurs états.
